# FASCICULE DE BREVET EUROPEEN

(11) **EP 2 328 434 B1**
(45) Date de publication et mention de la délivrance du brevet: **11.06.2014**
(21) Numéro de dépôt: 09748375.4
(22) Date de dépôt: 29.09.2009
(51) Int. Cl.: A41D 13/018, B60R 21/16, B60R 21/01, B60R 21/013, B62J 27/00, B60R 21/00

(54) **SYSTEME DE PROTECTION A COUSSIN D'AIR POUR VEHICULES MOTORISES SANS CELLULE DE SURVIE**
SCHUTZSYSTEM MIT LUFTKISSEN FÜR KRAFTFAHRZEUGE OHNE GASTZELLE
AIR CUSHION PROTECTION SYSTEM FOR MOTOR VEHICLES HAVING NO SURVIVAL CELL

(30) Priorité: 30.09.2008 FR 0805379
(43) Date de publication de la demande: 08.06.2011
(73) Titulaire: Trophy R&D, 78420 Carrières sur Seine (FR)
(72) Inventeur: DE ROALDES, Olivier, F-92700 Colombes (FR); DUFOUR, Fabien, F-92593 Eragny sur Oise (FR)
(74) Mandataire: Novagraaf Technologies
(86) Numéro de dépôt international: PCT/FR2009/001165
(87) Numéro de publication internationale: WO 2010/037931

(56) Documents cités:
- WO-A-01/81128
- DE-C1- 10 104 019
- FR-A- 2 680 146
- GB-A- 1 524 022
- US-A- 4 825 469
- US-A- 6 125 478

## Description

### DOMAINE TECHNIQUE DE L'INVENTION

L'invention se rapporte à un système de protection à coussin d'air, ou airbag, pour des utilisateurs de véhicules sans cellule de survie.

La présente invention concerne le domaine technique des systèmes de sécurité pour les utilisateurs de véhicules dépourvus de cellule de survie, notamment lorsqu'un véhicule motorisé peut atteindre des vitesses de déplacement supérieures à 30 Km/h. Plus particulièrement, l'invention concerne le domaine technique des systèmes de protection pour les situations d'accident en choc, c'est-à-dire lorsque le véhicule entre brutalement en contact contre un obstacle.

L'invention trouve des applications pour tous les véhicules dépourvus de cellule de survie, c'est-à-dire de cadre de protection apte à maintenir ses conducteurs et passagers dans un environnement protégé. Ainsi, l'invention s'applique aux utilisateurs de véhicules motorisés à deux, trois ou parfois quatre roues lorsqu'ils sont dépourvus d'armature, aux moto-neiges, aux scooters des mers, etc. Le système de protection selon l'invention peut être utilisé dans tous les domaines d'activités où surviennent des accidents générés par une forte décélération du véhicule due à une chute ou un impact violent contre un obstacle fixe ou mobile.

### ETAT DE LA TECHNIQUE ANTERIEURE

Il est connu de l'état de la technique plusieurs systèmes de protection destinés à protéger les passagers d'un véhicule motorisé sans cellule de survie. Toutefois, ces systèmes présentent plusieurs inconvénients.

La première contrainte vient du fait que le temps qui s'écoule entre le contact du véhicule contre un obstacle et l'impact des accidentés est généralement inférieur au dixième de seconde.

Par conséquent, l'activation d'un système de protection doit tenir compte du temps nécessaire à la détection de l'accident, la transmission de l'information, la commande et la mise en oeuvre des moyens de protection, c'est-à-dire au maximum 0,10 secondes pour des chocs à 50 km/h.

Le document de Brevet n° US 07/0051551 décrit un système de protection développé par la société HONDA pour le modèle GOLDWING 1800. Le système décrit dans ce document comporte deux couples de capteurs accéléromètriques fixés de part et d'autre des fourreaux de la fourche de la moto et un faisceau électrique relié à un module à airbag, intégré sur l'avant du réservoir à essence.

Ce système permet un gonflement de l'airbag suffisamment rapide compte tenu de la position spécifique du conducteur qui présente la particularité d'être droite et reculée. Toutefois, ce système présente l'inconvénient de ne protéger l'utilisateur du véhicule qu'en cas d'accident frontal, c'est-à-dire lorsqu'il est propulsé dans la direction de l'airbag. En revanche, en cas d'accident latéral, ou bien dès que l'utilisateur est propulsé en dehors d'un angle de 30 degrés par rapport au centre de déploiement de l'airbag, ce système de protection n'est plus d'aucune utilité. Le nombre d'accidents pour lequel un tel système est efficace est donc limité.

D'autre part, ce système n'est applicable qu'à des véhicules spécialement conçus à cet effet. En effet, l'incorporation des différents modules de protection, et plus particulièrement la mise en place de l'airbag, nécessite de nombreux aménagements sur le véhicule. Dès lors, l'installation de ce système de protection sur une pluralité de véhicules provenant de constructeurs différents est impossible puisqu'elle nécessiterait des coûts de préparation trop importants.

### Airbag incorporé sur le casque de l'utilisateur

Un autre système appartenant à l'état de la technique est divulgué dans le document de Brevet n° EP 1 797 782 qui décrit l'utilisation d'un airbag incorporé à l'arrière d'un casque porté par le conducteur d'un véhicule à deux roues.

Ce système de protection est composé de moyens de détection d'un accident et de moyens de protection de l'utilisateur. Les moyens de protection sont positionnés dans d'une coque située sur la partie arrière du casque. Cette coque comporte un airbag de protection cervicale et dorsale, un générateur de gaz à déclenchement pyrotechnique et un module d'activation du générateur de gaz. Les moyens de détection d'un accident comportent un boîtier électronique de détection intégrant des capteurs, une électronique de traitement du signal et de détection d'un choc ainsi qu'un système de pilotage sans fil de l'airbag. Ce boîtier électronique de détection est positionné par l'utilisateur sous la selle du véhicule par l'intermédiaire d'un adhésif, tandis qu'un autre boîtier de réception, fixé à proximité de l'airbag, transmet la commande d'activation et de gonflement de l'airbag.

Ce dispositif présente également des inconvénients. Notamment, l'incorporation de l'ensemble des éléments dans une coque positionnée à l'arrière du casque implique des contraintes d'espace qui ont pour effet de limiter les performances du dispositif. En effet, le générateur de gaz présente des dimensions réduites qui ne permettent de gonfler qu'un airbag de petite taille. Dès lors, l'airbag ne protège que les cervicales et la partie dorsale de l'utilisateur, ce qui ne couvre qu'une portion limitée des zones anatomiques susceptibles d'être touchées lors d'un accident.

D'autre part, le positionnement du boîtier sous la selle n'est pas optimum car la détection d'une décélération du cadre du véhicule n'est pas toujours suffisamment fiable et rapide. Par ailleurs, le montage du système par l'utilisateur peut dégrader ses performances si la technicité n'est pas maîtrisée.

De plus, l'appairage de ce système, c'est-à-dire la reconnaissance des moyens de détection d'un accident par les moyens de protection de l'utilisateur, se fait par liaison radio ce qui peut générer des problèmes de sécurité lorsqu'il est réalisé par l'utilisateur. En effet, lorsque deux casques sont situés dans la même zone de communication, le boîtier de détection peut se connecter avec le premier casque détecté même si celui-ci n'est pas la cible prévue.

Enfin, la gamme de fréquence utilisée peut, selon l'environnement, avoir une disponibilité dégradée ce qui retarde l'activation des moyens de protection.

### Airbag incorporé dans un gilet et actionné par un câble

Un troisième système de protection appartenant à l'état de la technique est décrit dans les documents de Brevet n° US 07/0061941 et US 6,125,478. Ces documents présentent un système de protection d'un utilisateur de véhicule motorisé à deux roues comportant un airbag positionné à l'intérieur d'un gilet et actionné par le biais d'un câble fixé au cadre du véhicule. En cas d'accident, si l'utilisateur est éjecté, le câble du gilet se décroche, activant par la même occasion le gonflage de l'airbag.

US 6 125 478 A décrit particulièrement un airbag de protection destiné à prendre la forme d'une pièce d'habillement lorsqu'il est gonflé, comportant au moins une enveloppe constituée d'une face extérieure et d'une face intérieure en ce que les faces extérieure et intérieure sont reliées par plusieurs bandes de liaison, deux bandes de liaison successives définissant entre-elles une portion extérieure et une portion intérieure positionnées en vis-à-vis, la portion intérieure présentant une surface inférieure à la surface de la portion extérieure qui est en vis-à-vis. L'enveloppe définit une partie ventrale une partie dorsale et une partie de jonction reliant la partie ventrale et la partie dorsale au niveau des épaules.

Toutefois, ce système présente également des inconvénients. D'abord, le temps de mise en place des moyens de protection est d'environ 1,5 secondes, ce qui est insuffisant pour des impacts proches contre des obstacles lors d'un choc à 50 Km/h. Par ailleurs, l'utilisation d'un câble pour déclencher l'ouverture de l'airbag est problématique puisqu'elle impose l'utilisation d'une liaison physique entre le véhicule et le gilet. En outre une telle méthode de déclenchement du moyen de protection est inefficace pour les chocs qui n'entraînent pas une éjection du véhicule.

### Airbag lombaire et dorsal

Un quatrième système de protection de l'art antérieur est décrit dans le document de brevet n° WO 08/044222. L'objet de ce document est un airbag de protection des zones cervicale et dorsale apte à être incorporé dans un vêtement de protection et capable d'être retiré après un accident par le biais de liaisons détachables. Toutefois, ce document ne présente pas de solution concernant les moyens de détection d'accident pour l'activation de l'airbag. Par ailleurs, la solution décrite ne permet pas de protéger l'intégralité du tronc puisque les zones de protections sont limitées aux cervicales et à la partie dorsale. D'autre part, de part le positionnement initial de l'airbag sur les épaules, un tel système présente des durées d'ouverture qui peuvent être longues au regard du type d'accident auxquels peuvent être confrontés les conducteurs de véhicules motorisés.

### EXPOSE DE L'INVENTION

La présente invention vise à résoudre les problèmes soulevés par l'état de la technique en proposant un système de protection par airbag qui soit adapté aux problématiques des véhicules dépourvus de cellule de survie et qui permette d'améliorer le niveau de protection des utilisateurs.

### Concernant le système de protection

Selon un premier aspect, l'invention concerne un système de détection d'un accident en choc pour l'activation d'un module de protection d'un utilisateur de véhicule motorisé dépourvu de cellule de survie.

Comme indiqué précédemment, le document n° US 07/0051551 décrit un système de détection qui soulève plusieurs problèmes techniques relatifs à la protection des utilisateurs en cas d'éjection de la moto du fait du positionnement de l'airbag sur le cadre de cette moto.

De la même façon, le système de détection objet du document EP 1 797 782 n'est pas optimisé en ce que le positionnement du boîtier électronique sous la selle de la moto n'assure pas une fiabilité de détection suffisante. De plus, la mise en place du dispositif pouvant être assurée par l'utilisateur, des problèmes de montage du dispositif peuvent compromettre la fiabilité du système.

D'autre part, les documents n° US 07/0061941 et US 6,125,478 présentent une alternative qui n'est pas non plus satisfaisante. En effet, l'utilisation d'un câble pour transmettre le signal d'activation des moyens de protection induit des temps de réaction trop importants. En outre un tel système de détection est inefficace pour les chocs qui n'impliquent pas une éjection de la moto.

Par conséquent, selon ce premier aspect, l'invention vise à résoudre les inconvénients de l'état de la technique en proposant un système de protection pour utilisateurs de véhicules qui soit utilisable avec des moyens de protection solidaire de l'utilisateur tout en conservant une fiabilité de détection et des temps d'activation suffisant pour assurer la protection de l'utilisateur.

À ce titre, l'invention concerne un système de protection pour protéger un utilisateur de véhicule lors d'un accident en choc, comportant un module de protection et un module de détection doté d'une unité de gestion apte à analyser des informations contextuelles et à générer un signal d'alerte en cas de détection d'un accident, et d'une unité de communication en liaison avec l'unité de gestion pour recevoir le signal d'alerte. Le module de détection comporte également au moins un bloc de mesures accéléromètriques agencé pour acquérir des informations contextuelles et relié à cette unité de gestion pour lui transmettre les informations contextuelles acquises. Par ailleurs, l'unité de communication est apte à émettre un signal d'activation par radiocommunication vers le module de protection de sorte à activer ce module de protection lorsqu'un accident en choc est détecté.

L'utilisation d'au moins un bloc de mesures accéléromètriques trois axes permet d'améliorer la fiabilité de la détection en limitant les contraintes de positionnement et d'orientation du bloc de mesures accélérométriques. D'autre part, le déclenchement d'un accident par le biais de mesures accéléromètriques et la transmission d'un signal d'activation des moyens de protection par le biais d'une liaison radio assurent une protection fiable et rapide de l'utilisateur.

Avantageusement, le bloc de mesures accéléromètriques comporte deux couples d'accéléromètres trois axes reliés à ladite unité de gestion de sorte à réaliser une analyse redondée des informations contextuelles acquises. Cette redondance des blocs de mesures accéléromètriques assure une bonne fiabilité des informations contextuelles transmises aux moyens de gestion pour la détection d'un accident en choc.

De préférence, le module de détection comporte un bloc d'itération apte à réitérer l'émission du message d'activation au moins à trois reprises et à des intervalles de temps variables. En effet, le fait d'envoyer plusieurs fois un même signal d'alerte à des intervalles de temps variables assure la robustesse du protocole de communication radiofréquence. Ainsi, même si une première trame du message d'alerte n'est pas reçue par les moyens de protection du fait d'une collision radio fréquence, les trames suivantes permettront d'activer ces moyens de protection sans altérer les performances du système.

Avantageusement, le système de protection comporte deux blocs de mesures accéléromètriques apte à être positionnés de part et d'autre de deux fourreaux supportant une fourche frontale du véhicule. Ce positionnement optimise la performance du système en assurant une détection rapide d'un accident en choc.

De préférence, le bloc de mesures accéléromètriques est intégré dans un boîtier de fixation doté d'un mécanisme de traçabilité, ce qui permet de détecter une intervention sur les boîtiers de fixation qui pourrait dégrader la performance du système de protection.

Plus précisément, ce mécanisme de traçabilité peut être réalisé par le biais d'un capot fixé sur le boîtier de fixation de sorte à obstruer l'accès aux zones fonctionnelles du boîtier de fixation. En effet, le capot de protection casse lorsqu'une personne veut accéder au système de serrage. Par consequent, un système n'ayant plus de capot permet d'identifier une atteinte au boîtier de fixation et de suspecter un défaut.

Avantageusement, chaque boîtier de fixation est soutenu par deux colliers de serrage. Ces colliers de serrage permettent de fixer les blocs de mesures accéléromètriques sur n'importe quel modèle de véhicule et de fourche.

De préférence, chaque boîtier de fixation présente une partie inférieure pourvue d'un faisceau électrique. Ce positionnement du faisceau électrique per met de limiter, par gravité, la pénétration d'eau dans le boîtier.

Avantageusement, chaque bloc de mesures accéléromètriques du système de protection est relié à l'unité de gestion par le biais d'un bus CAN dédié. L'utilisation d'un bus CAN dédié permet d'assurer une bonne résistance aux perturbations électriques tout en garantissant un haut débit de transmission de l'information.

De préférence, l'unité de gestion comporte un bloc de calcul de variation de vitesse à partir des informations contextuelles acquises par le bloc de mesures accéléromètriques, ce bloc de calcul étant apte à s'activer dès que la résultante des accélérations mesurées par le bloc de mesures accéléromètriques est supérieure à une valeur seuil, de préférence comprise entre 2 et 100 g.

Par ailleurs, le bloc de calcul de variation de vitesse comporte avantageusement un bloc de génération du signal d'alerte dès lors que la variation de vitesse est supérieure à un seuil, de préférence compris entre 1 et 20 mètres par seconde.

Ainsi, la détection d'un accident en choc est basée sur deux paramètres dont le premier utilise un seuil accéléromètrique mettant le système en alerte et le deuxième utilise un seuil de variation de vitesse pour confirmer l'avènement de l'accident. Dès lors, une information correspondant à un événement intempestif autre qu'un accident, notamment le passage d'un trottoir ou d'un nid de poule, n'est pas interprété par le module de détection comme un accident.

Avantageusement, l'unité de gestion comporte un bloc de diagnostique apte à recevoir, par liaison radio via l'unité de communication, un signal de mise en service du module de protection.

De préférence, le bloc de diagnostique est relié à un écran d'affichage comportant un élément d'information apte à s'activer lorsque l'unité de diagnostique reçoit le signal de mise en service du module de protection.

Ainsi, Le bloc de diagnostique analyse l'intégrité de l'électronique du système et indique l'information sur l'écran d'affichage. L'utilisateur du vêtement de protection peut connaître à tout moment l'état de fonctionnement du système.

### Le vêtement de protection

Selon un deuxième aspect, l'invention concerne également un vêtement de protection d'un utilisateur de véhicule pouvant appartenir au système de protection décrit précédemment.

Comme indiqué, le document n° US 07/0051551 décrit un module de protection à airbag monté sur le modèle GOLDWIN 1800. Mais ce système, et plus particulièrement la position de l'airbag sur la moto, n'est pas adapté pour protéger l'utilisateur dans tout type d'accident en choc. En effet, lorsque l'utilisateur est éjecté, l'airbag n'est d'aucune utilité.

De la même façon, le module de protection objet du document EP 1 797 782 n'est pas optimisé dans la mesure où il ne protège que les zones anatomiques lombaire et dorsale, ce qui ne couvre qu'une portion limitée des zones susceptibles d'être touchées lors d'un accident de moto.

Par ailleurs, les solutions divulguées par les documents n° US 07/0061941 et US 6,125,478 ne sont pas non plus satisfaisantes. En effet, le déclenchement des moyens de protection par le biais d'un câble relié au cadre de la moto induit une inertie de déclenchement de l'airbag et n'est efficace que dans l'hypothèse où l'utilisateur est éjecté de son véhicule.

En outre, l'objet du document n° WO 08/044222 soulève également des problèmes techniques. Notamment, la protection conférée par cet airbag est limitée à certaines zones anatomiques. Par ailleurs, cet airbag n'est fixé à la pièce d'habillement que par le biais d'une zone située au niveau du cou, ce qui peut être insuffisant pour conférer à l'airbag la forme adéquate pour une position de protection optimale.

Par conséquent, selon un deuxième aspect, l'invention vise à résoudre les inconvénients de l'état de la technique en proposant un vêtement de protection pour utilisateurs de véhicules motorisés qui permette de protéger l'utilisateur de façon optimale pour tout type d'accident, tout en assurant une mise en place des moyens de protection suffisamment rapide pour être efficace.

À ce titre, l'invention concerne également un vêtement de protection pour protéger un utilisateur de véhicule lors d'un accident en choc, comportant une pièce d'habillement et des moyens de protection incorporé dans la pièce d'habillement, le vêtement de protection étant doté d'au moins un airbag, d'au moins un générateur de gaz apte à gonfler l'airbag, et d'une unité de commande apte à activer le générateur de gaz, dans lequel le vêtement de protection comporte une unité de communication embarquée apte à recevoir un signal d'alerte par liaison radio pour commander l'activation du générateur de gaz lors d'un accident en choc.

L'utilisation d'une unité de communication radio fréquence intégrée dans le vêtement de protection permet d'accélérer la réception d'un signal d'activation des moyens de protection et donc d'optimiser l'activation de ces moyens de protection.

De préférence, les moyens de protection sont incorporés dans la pièce d'habillement de sorte que, lors de l'activation du générateur de gaz, l'airbag prend sensiblement la forme d'un gilet. L'incorporation de l'airbag à l'intérieur de la pièce d'habillement de sorte qu'il prenne sensiblement la forme d'un gilet permet d'assurer une protection sur l'ensemble du tronc de l'utilisateur.

Avantageusement, la pièce d'habillement est dotée d'éléments sécables positionnés de sorte à autoriser le déploiement de l'airbag.

De préférence, la pièce d'habillement présente également des soufflets d'expansion reliant les extrémités des éléments sécables de sorte que la pièce d'habillement accompagne le déploiement de l'airbag. Ces soufflets d'expansion protègent en partie l'airbag contre les éléments extérieurs qui pourraient l'endommager.

Avantageusement, la pièce d'habillement comporte un élément de fermeture et un interrupteur électronique coopérant avec l'élément de fermeture de sorte à émettre un signal de mise en service du vêtement de protection lorsque cette pièce d'habillement est fermée. L'utilisation d'un interrupteur électronique s'activant avec la fermeture de la pièce d'habillement permet de mettre sous tension l'unité de commande. Dès lors, les moyens de protection ne peuvent être activé tant que le vêtement de protection n'est pas convenablement fermé.

De préférence, l'interrupteur électronique est relié à l'unité de communication embarquée pour permettre la transmission du signal de mise en service par liaison radio. Ainsi, lorsque le bloc électronique n'est pas sous tension, l'unité de commande du vêtement de protection n'est pas sous tension et l'unité de gestion appartenant au système de détection indique un défaut sur l'écran d'affichage. Il suffit alors que l'utilisateur ferme correctement son gilet pour que ce défaut disparaisse. Cette fonction permet de contrôler le port correct du vêtement de protection par l'utilisateur.

Avantageusement, l'airbag présente deux portions de jointures fixées de part et d'autre de l'élément de fermeture de la pièce d'habillement. Ces deux portions de jointure assurent le positionnement et le maintien de l'airbag par rapport à la pièce d'habillement au niveau de la fermeture centrale.

De préférence, la pièce d'habillement comporte également une ceinture lombaire de serrage dotée de deux extrémités, la ceinture lombaire de serrage étant disposée au travers de passants aménagés dans l'airbag, les deux extrémités de la ceinture de serrage étant cousues sur les portions de jointures de l'airbag, de part et d'autre de la fermeture de la pièce d'habillement. De la même façon, la ceinture lombaire de serrage et sa boucle d'ajustement maintiennent l'airbag dans sa position de protection optimale.

Avantageusement, la ceinture lombaire de serrage comporte au moins une boucle d'ajustement en longueur permettant également d'ajuster les moyens de protection au gabarit de l'utilisateur.

De préférence, les moyens de protection comportent également une plaque dorsale maintenue par la pièce d'habillement et dotée d'éléments de réception aptes à supporter l'unité de commande et/ou les générateurs de gaz. L'utilisation d'une plaque dorsale dotée d'éléments de réception de l'unité de commande et/ou du générateur de gaz permet d'assurer les fonctions standards d'une plaque dorsale tout en protégeant l'utilisateur contre l'intrusion des éléments utilisés pour l'activation de l'airbag.

Avantageusement, la plaque dorsale forme un bloc de protection, le bloc de protection présentant des évidements de réception de l'unité de commande et/ou du générateur de gaz. Cette configuration permet de protéger également l'unité commande et/ou les générateurs de gaz en cas d'accident.

Selon un mode de réalisation particulier, la plaque dorsale formant le bloc de protection est réalisée en une pièce, ce qui augmente sa solidité et améliore en conséquence la protection conférée.

De préférence, les éléments de réception des générateurs de gaz sont agencés de part et d'autre de l'axe médian de la plaque dorsale. Une telle disposition protège la colonne vertébrale de l'utilisateur contre tout impact violent contre ces générateurs de gaz.

Avantageusement, les générateurs de gaz utilisent une technologie d'injection de gaz à froid tel que de l'hélium, ce qui permet d'éviter les risques de brûlure et d'assurer des vitesses de dégonflement de l'airbag qui soient suffisamment faibles pour protéger l'utilisateur durant toute la durée de l'accident, même en cas de glissement prolongé.

### L'airbag

Selon un troisième aspect, l'invention concerne également un airbag de protection d'un utilisateur de véhicule motorisé dépourvu de cellule de survie, apte s'insérer dans une pièce d'habillement et pouvant appartenir au vêtement de protection et, de façon plus générale au système de protection tels que précédemment décrits.

Les solutions divulguées par les documents n° US 07/0061941 et US 6,125,478 ne sont pas satisfaisantes dans la mesure où les airbags présentent des boudins d'air indépendants qui nécessitent des temps de gonflement trop importants pour être efficaces en cas d'accident de véhicules motorisés.

Le document n° WO 08/044222 présente également un airbag constitué de plusieurs portions. Dès lors, l'acheminement du gaz est complexe, les vitesses de gonflement sont trop longues et la protection n'est pas optimisée.

Par conséquent, selon un troisième aspect, l'invention vise à résoudre les inconvénients de l'état de la technique en proposant un airbag présentant une vitesse d'activation et une durée de protection suffisante pour protéger l'utilisateur en cas d'accident à grande vitesse et permettant, par son gonflement, d'assurer cette fonction de protection optimisée, sans exercer de contraintes sur son porteur.

À ce titre, l'invention concerne en troisième lieu un airbag de protection destiné à prendre la forme d'une pièce d'habillement lorsqu'il est gonflé, comportant au moins une enveloppe constituée d'une face extérieure et d'une face intérieure et l'enveloppe définissant une partie ventrale, une partie dorsale et une partie de jonction, plusieurs bandes de liaison, deux bandes de liaison successives définissant entre-elles une portion extérieure et une portion intérieure positionnées en vis-à-vis, la portion intérieure présentant une surface inférieure à la surface de la portion extérieure qui est en vis-à-vis, et tel que, la partie de jonction reliant la partie ventrale et la partie dorsale au niveau des épaules, lesdites plusieurs bandes de liaison sont en outre agencées dans la partie de jonction, de sorte que, lorsque l'enveloppe est gonflée, l'airbag présente des parties auto-courbées épousant les formes du corps humain.

Cette configuration est une alternative efficace à l'utilisation d'une pluralité de coussins d'air. Elle permet d'obtenir un airbag qui, lorsqu'il est gonflé, présente la forme d'un gilet ajusté suivant les formes du corps humain pour garantir un positionnement optimal de l'airbag.

Avantageusement la partie ventrale est divisée en deux sous parties séparées par une ouverture centrale, ce qui permet de coopérer avec le gilet de protection.

De préférence, les deux sous parties définissant l'ouverture centrale sont dotées de portions de jointure aptes à se fixer sur une pièce d'habillement. Ces portions de jointure permettent de fixer l'airbag sur le gilet afin d'assurer le maintien en position de l'airbag par rapport au gilet.

Avantageusement, la partie dorsale présente une forme de conduit courbé refermé sur lui-même. Cette configuration permet de limiter le volume d'air à injecter dans l'enveloppe et donc de limiter le poids et le volume des générateurs de gaz dans le vêtement de protection. En outre, une telle configuration libère un espace pour intégrer la plaque dorsale, l'unité de commande et le générateur de gaz associés.

De préférence, l'airbag comporte une enveloppe secondaire reliée à l'enveloppe par l'intermédiaire d'au moins un orifice. Une telle combinaison permet de protéger, de façon plus spécifique, certaine parties du corps sans nécessiter l'utilisation de générateurs de gaz complémentaires.

Avantageusement, l'enveloppe secondaire repose sur la partie de jonction de sorte à se positionner sous la nuque d'un utilisateur lorsque ladite enveloppe secondaire est gonflée.

De préférence, les bandes de liaison sont régulièrement espacées de sorte à conférer à l'enveloppe gonflée une épaisseur sensiblement constante, de préférence comprise entre 5 et 20 centimètres. Dès lors, l'intégration de l'airbag dans la pièce d'habillement est facilitée et la protection de l'utilisateur est assurée sur toutes les zones du tronc.

Avantageusement, l'enveloppe présente des bandes de liaison orientées sensiblement selon une même direction, ce qui permet d'obtenir une géométrie régulière facilitant l'acheminement des gaz vers les différentes parties de l'airbag.

De préférence, l'enveloppe comporte au moins une ouverture d'injection positionnée sensiblement au niveau de la zone supérieure de la partie dorsale.

Avantageusement, l'enveloppe comporte deux ouvertures d'injection positionnées de part et d'autre du plan médian de la partie dorsale. Cette position des ouvertures d'injection permet de placer les générateurs de gaz au niveau de zones anatomiques qui sont relativement résistantes tout en optimisant la vitesse de gonflement de l'airbag.

De préférence, l'enveloppe est constituée de plusieurs pièces dont les extrémités sont collées les unes aux autres. Le fait d'assembler les pièces de l'airbag par collage plutôt que par couture permet d'obtenir une liaison hermétique et donc d'éviter les fuites de gaz qui conduiraient à un dégonflement rapide de l'airbag.

### La plaque dorsale

Selon un quatrième aspect, l'invention concerne également une plaque dorsale apte à être intégrée dans un vêtement de protection et, de façon plus générale, dans un système de protection tels que précédemment décrits.

À ce titre, selon un quatrième aspect, l'invention vise à proposer une plaque dorsale qui permette d'intégrer des moyens d'activation d'un airbag en assurant les fonctions standard d'une plaque dorsale et en protégeant l'utilisateur contre l'intrusion des moyens d'activation de l'airbag.

À ce titre, l'invention concerne également une plaque dorsale pour utilisateurs de véhicule apte à être intégrée dans un vêtement de protection, la plaque dorsale formant un bloc de protection présentant des évidements de réception aptes à supporter une unité de commande et/ou au moins un générateur de gaz. Cette configuration présente l'avantage de protéger l'utilisateur et également les moyens d'activation de l'airbag en cas d'accident.

Selon un mode de réalisation particulier, la plaque dorsale est réalisée en une pièce, ce qui augmente sa solidité et améliore en conséquence la protection conférée.

De préférence, la plaque dorsale présente une portion centrale et une portion périphérique, la portion centrale présentant une surépaisseur vis-à-vis de la portion périphérique.

Avantageusement, les évidements de réception sont agencés dans la portion centrale. Ainsi, la surépaisseur nécessaire à la réalisation des évidements de réception est restreinte à la portion centrale, ce qui permet de limiter le poids de ne pas augmenter indûment le poids de la plaque dorsale dans son ensemble.

De préférence, des rainures sont formés dans la portion périphérique de sorte à assurer la flexibilité de la plaque dorsale.

Avantageusement, les rainures sont orientées selon deux directions sensiblement perpendiculaires.

De préférence, la plaque dorsale comporte une partie extérieure présentant une première densité de matière et une partie intérieure présentant une deuxième densité de matière.

Avantageusement, la première densité de matière est dense et la deuxième densité de matière est peu dense. Ainsi, le confort d'utilisation de la plaque dorsale est assuré par la partie intérieure.

De préférence, deux évidements de réception des générateurs de gaz sont agencés de part et d'autre de l'axe médian de la plaque dorsale. Une telle disposition protège la colonne vertébrale de l'utilisateur contre tout impact violent contre ces générateurs de gaz.

Avantageusement, la plaque dorsale présente un pourtour doté de moyens d'ancrage aptes à assurer la fixation de cette plaque dans le vêtement de protection.

### BREVE DESCRIPTION DES FIGURES

D'autres caractéristiques et avantages de l'invention ressortiront à la lecture qui suit d'un exemple de réalisation détaillé, en référence aux figures annexées qui représentent respectivement :
- la figure 1, une représentation simplifiée d'un système de protection selon l'invention aménagé sur une moto ;
- les figure 2a et 2b, deux représentations schématiques d'un exemple de réalisation d'un boîtier de fixation appartenant au module de détection du système de protection de la figure 1 ;
- la figure 3, une représentation schématique d'une architecture du système de détection appartenant au système de protection de la figure 1 ;
- la figure 4, un algorithme de détection d'accident employé par le module de détection de la figure 3 ;
- la figure 5, une représentation en perspective d'un exemple de réalisation d'une unité de gestion et d'un écran d'affichage appartenant au système de protection de la figure 1 ;
- les figures 6a et 6b, deux vues de face d'un gilet ouvert appartenant au vêtement de protection du système de protection illustré sur la figure 1 ;
- les figures 7a et 7b, deux représentations de face et de dessus d'un premier mode de réalisation de la plaque dorsale appartenant au vêtement de protection du système de la figure 1 ;
- les figures 8a et 8b, deux représentations de face et en coupe A-A d'un second mode de réalisation de la plaque dorsale appartenant au vêtement de protection du système de la figure 1 ;
- la figure 8c, une représentation en perspective d'un troisième mode de réalisation de la plaque dorsale appartenant au vêtement de protection du système de la figure 1 ;
- la figure 9, une représentation schématique et de face d'un gilet selon l'invention comportant un interrupteur électronique ;
- la figure 10, une représentation schématique et du dessus d'un airbag appartenant au vêtement de protection de la figure 1 ;
- la figure 11, une représentation schématique et du dessus d'un airbag ouvert appartenant au vêtement de protection de la figure 1 ;
- les figures 12a et 12b, une représentation d'un utilisateur de véhicule motorisé portant un airbag appartenant au système de protection selon l'invention ;
- la figure 13, une représentation en perspective d'un second exemple de réalisation d'un airbag appartenant au vêtement de protection de la figure 1 ;
- les figures 14a et 14b, deux représentations schématiques en vue de devant et en vue de coupe BB de l'airbag de la figure 13 ;
- les figure 14c et 14d, deux représentations schématiques en vue de dessus et en vue de coupe AA de l'airbag de la figure 13.

### DESCRIPTION DETAILLEE D'UN MODE DE REALISATION

### Description du système de protection

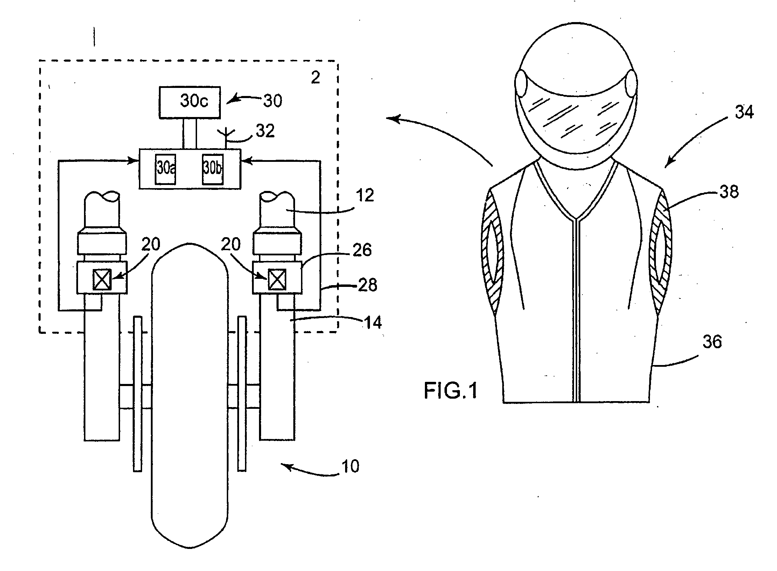

La figure 1 représente un exemple de réalisation d'un système de protection selon l'invention destiné à un utilisateur de véhicule 10 motorisé à deux roues, dépourvu de cellule de survie.

Le véhicule 10 motorisé sur lequel est positionné l'utilisateur comporte une fourche 12 avant supportée par deux fourreaux 14. De façon alternative, le véhicule 10 motorisé pourrait être un autre véhicule impliquant des problèmes de sécurité similaires à ceux des motos, tel qu'un véhicule motorisé à trois roues, un scooter des mers ou des neiges, un vélo de montagne, etc.

Selon l'exemple de réalisation de la figure 1, le système de protection comporte un module électronique de détection 2 doté de deux blocs de mesures accéléromètriques 20 supportés par des boîtiers de fixation 26 (décrits ultérieurement). Les boîtiers de fixation 26 sont résistants à l'eau, aux perturbations électromagnétiques et aux chocs.

Ils sont positionnés de part et d'autre des fourreaux 14 de fourches 12 afin de permettre une détection d'accident quel que soit l'angle d'impact avec l'obstacle.

Le module électronique de détection 2 comporte en outre des faisceaux électriques 28 reliant les blocs de mesures accéléromètriques 20 à une unité de gestion 30 d'informations contextuelles. Ces faisceaux électriques 28 sont également reliés à la batterie du véhicule afin d'alimenter les blocs de mesures accéléromètriques 20 en électricité. Ces faisceaux électriques 28 sont avantageusement étanches à l'eau et résistants aux gravillonnages, aux sels, aux hydrocarbures, ainsi qu'aux perturbations électromagnétiques. Ils présentent la particularité de ne pas comporter de connecteur. Ainsi la fiabilité du dispositif est accrue puisqu'il n'est pas soumis aux problèmes de déconnection accidentelle de connecteurs.

L'unité de gestion 30 comporte un bloc d'analyse 30a des informations contextuelles provenant des blocs de mesures accéléromètriques 20 afin de permettre la détection d'un choc violent. L'unité de gestion 30 comporte également un bloc de diagnostique 30b des alimentations et des systèmes électroniques appartenant au système de protection.

Le système de protection comporte d'autre part un écran d'affichage 30c en liaison avec l'unité de gestion 30. Cet écran d'affichage 30c est de préférence doté de deux diodes présentant chacune deux couleurs distinctes : une couleur informe que le vêtement de protection de l'utilisateur fonctionne correctement, tandis que l'autre signale une défaillance. L'une des diodes est dédiée au système de protection du conducteur alors que l'autre diode est dédiée au système de protection du passager. L'écran d'affichage 30c présente un système de fixation permettant un positionnement dans le champ de vision de l'utilisateur sans gêner la visibilité du tableau de bord.

L'unité de gestion 30 est en liaison avec une unité de communication 32. Cette unité de communication 32 communique par liaison radio avec un vêtement de protection 34 selon une bande de fréquence sélectionnée en fonction de sa résistance aux perturbations et de son rayon d'action.

Selon un mode de réalisation préféré, la fréquence de communication est comprise entre 865 et 868 MHz, ce qui permet d'éviter les interférences dues aux communications sans fil de type *bluetooth, wifi,* etc. Alternativement, une telle bande de fréquences pourrait être centrée autour de 900 MHz.

Le vêtement de protection 34 comporte un gilet 36 coopérant avec un airbag (décrits ci-après). L'airbag 38 est incorporé dans le gilet 36. Par ailleurs, ce vêtement de protection 34 est conçu pour être résistant à l'eau et au choc tout en autorisant le changement de la source d'énergie. La description de ce vêtement de protection 34 sera détaillée ci-dessous.

Il est à noter que l'installation du système est, de préférence, effectuée en seconde monte par des techniciens agréés. D'autre part, les pièces mécaniques et électroniques sont avantageusement réalisées de sorte que l'intervention d'une personne non agréée soit impossible. Ainsi, la maintenance du système ne nécessite que le changement de la source d'énergie du vêtement de protection 34. Par conséquent, outre le changement de la source d'énergie de ce vêtement de protection 34, tout composant défectueux entraîne le remplacement de l'ensemble des composants et l'utilisateur doit s'adresser aux techniciens agréés.

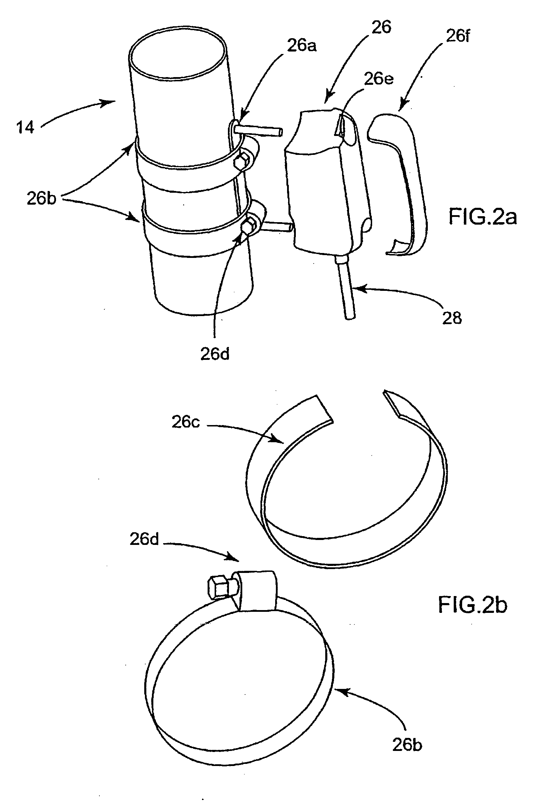

Les figures 2a et 2b illustrent un exemple de réalisation d'un boîtier de fixation 26 appartenant au système de protection de la figure 1.

Ce boîtier de fixation 26 présente avantageusement une étanchéité IP 67 et une résistance au gravillonnage, au sel et aux hydrocarbures. Il est fixé sur un fourreau 14 de fourche 12 par l'intermédiaire d'une semelle de réception 26a qui est pourvue de deux tiges filetées orientées selon une direction perpendiculaire à la surface extérieure du fourreau 14.

La semelle de réception 26a est maintenue en position sur le fourreau 14 par l'intermédiaire de deux colliers 26b, éventuellement gainés de caoutchouc 26c pour protéger le fourreau 14 de fourche 12. La longueur des colliers 26b peut être ajustée en fonction des dimensions du fourreau 14 sur lequel doit être monté le boîtier de fixation 26. Les colliers 26b sont en outre dotés d'un élément de serrage mécanique 26d permettant d'assurer une liaison rigide entre le boîtier 26 et le fourreau 14. Les tiges filetées de la semelle de réception 26a peuvent s'emboîter dans des perçages 26e réalisés dans le boîtier de fixation 26. Le boîtier de fixation 26 est ainsi maintenu en position par l'intermédiaire d'écrous (non représenté).

De façon avantageuse, les éléments de serrage 26d des colliers 26b s'imbriquent sous la partie arrière du boîtier 26 de sorte à ne pas être accessibles lorsque le boîtier est monté sur le fourreau 14. Le boîtier 26 est également pourvu d'un capot 26f positionné de sorte à empêcher l'accès aux écrous et assurer ainsi la traçabilité du boîtier. En effet, il est impératif de détruire le capot pour accéder aux zones fonctionnelles, et plus particulièrement aux écrous, permettant de démonter le boîtier de fixation 26.

Il est à noter que le faisceau électrique de sortie 28 du boîtier de fixation 26 est avantageusement orienté vers le bas. Ainsi, l'introduction d'eau à l'intérieur du boîtier de protection est naturellement limitée par l'action de la gravité.

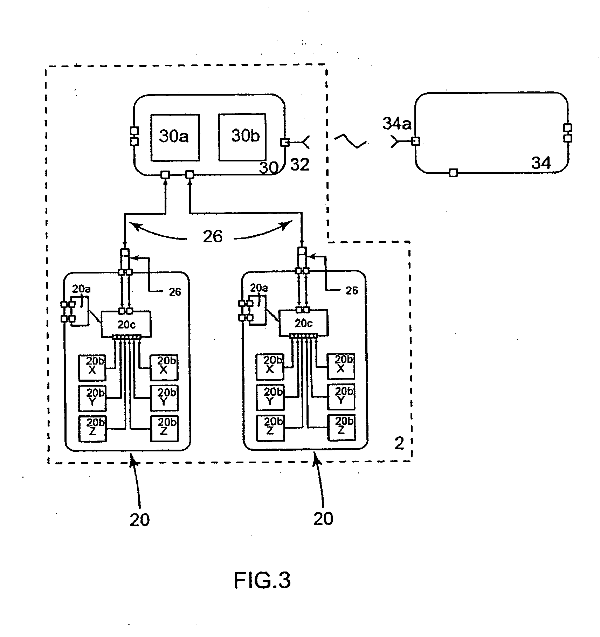

La figure 3 illustre de façon schématique l'architecture électronique du système de protection décrit en référence à la figure 1.

Selon cette représentation, le système de protection comporte un module de détection 2 communiquant avec un vêtement de protection 34 par liaison radio. Comme mentionné précédemment, le module de détection 2 comporte deux blocs de mesures accéléromètriques 20. De façon avantageuse, chaque bloc de mesures accéléromètriques 20 comporte deux accéléromètres trois axes afin d'assurer la fiabilité de la mesure par redondance, sans avoir de contrainte de positionnement et d'orientation.

Ces blocs de mesures accéléromètriques 20 assurent également la numérisation des signaux reçus afin de résister aux perturbations environnementales pouvant affecter le signal depuis l'acquisition jusqu'au pilotage du vêtement de protection. Ils réalisent également un calcul préalable de la résultante au centre de la roue afin de lisser la charge de calcul globale et de satisfaire les contraintes de réactivité du système de protection.

Pour ce faire, les blocs de mesures accéléromètriques 20 comportent chacun une entrée 20a pour l'alimentation des composants, six accéléromètres 20b composants deux capteurs accéléromètriques trois axes et un microcontrôleur 20c. Ces blocs de mesures accéléromètriques 20 sont reliés à l'unité de gestion 30 par le biais d'un bus CAN dédié 26. De façon avantageuse, chaque capteur accéléromètrique trois axes est constitué de trois accéléromètres 20b de ± 250g. Ils sont de préférence orientés de manière à représenter un repère orthonormé afin de mesurer les accélérations dans les trois directions de l'espace.

Les informations contextuelles émanant de ces blocs de mesures accéléromètriques 20 correspondent à des données relatives aux variations de vitesse du véhicule selon les trois axes de l'espace. Ces informations contextuelles sont ensuite transmises à l'unité de gestion 30 par le biais d'un bus CAN dédié 26. Le débit maximum de ce bus CAN dédié 26 est de 1 Mbps ce qui est suffisant pour l'application recherchée. En outre, ce bus CAN dédié 26 est avantageux car il est résistant aux environnements électroniques perturbés.

Une fois les informations contextuelles reçues par le module de gestion 30, elles sont analysées par le bloc d'analyse 30a qui intègre un algorithme de détection d'accident. Cet algorithme de détection permet, à partir des signaux provenant des blocs de mesures accélérométriques 20 d'analyser les informations contextuelles pour en déduire la situation de roulage du véhicule 10 et générer, en cas de détection d'accident, un signal d'activation du vêtement de protection 34. Ce signal d'activation est alors émis par ondes radio à partir de l'unité de communication 32 vers une unité de communication embarquée 34a sur le vêtement de protection 34.

Le bloc de diagnostique 30b de l'unité de gestion permet avantageusement de communiquer avec les différents composants électroniques du système de protection afin de déterminer l'état de fonctionnement des blocs de mesures accéléromètriques 20, du bloc de communication 32 du module de détection 2, de l'unité de communication embarquée 34a du vêtement de protection 34 et du vêtement de protection 34. Ainsi, dès lors que l'un de ces composants n'est pas sous tension ou fonctionne de façon anormale, le bloc de diagnostique 30b génère une information d'erreur qui peut être affichée sur deux diodes de l'écran d'affichage 30c. Les deux diodes présentent des informations relatives d'une part au conducteur du véhicule et d'autre part à son passager. Cette fonction permet notamment de contrôler le port, en position fermée, du vêtement de protection 34.

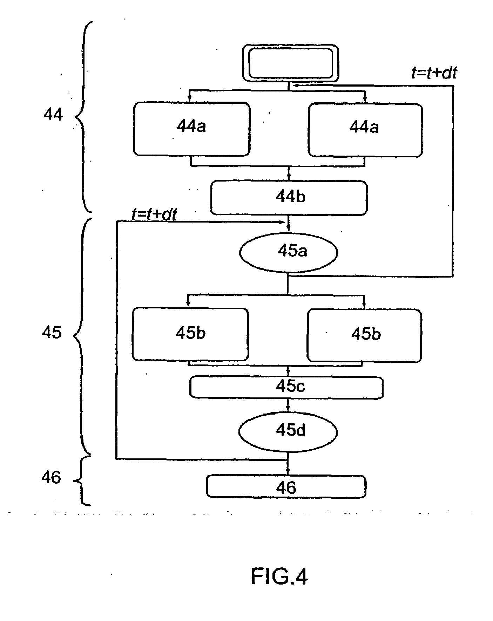

La figure 4 illustre un organigramme simplifié de l'algorithme de détection d'un accident en choc réalisé par le bloc d'analyse 30b.

La première étape de l'algorithme de détection est une étape de traitement 40 des informations recueillies par les blocs de mesures accéléromètriques 20. Cette étape de traitement 44 comporte une première sous étape 44a consistant à recueillir les informations contextuelles correspondant à une situation de déplacement du véhicule 10. Ainsi le bloc d'analyse 30b recueille, à chaque instant t, les mesures de la décélération à gauche et à droite de la roue. Une seconde sous étape 44b consiste ensuite à calculer la résultante de décélération R correspondante à ces décélérations au centre de la roue.

La deuxième étape de l'algorithme de détection est une étape d'analyse 45 des informations contextuelles recueillies. La première sous étape 45a consiste à vérifier que la valeur de la résultante de décélération R est inférieure à un seuil accéléromètrique prédéterminé. Par exemple, un tel seuil accéléromètrique peut être fixé à 10 g. Dès que cette valeur seuil de résultante de décélération R est dépassée, le bloc d'analyse 30b effectue une deuxième sous étape 45b consistant à recueillir les mesures de la décélération à gauche et à droite de la roue à un instant **t + dt.**

Ainsi, le bloc d'analyse 30b calcule, lors de l'étape 45c, la variation de vitesse ΔV du véhicule 10 entre les instants **t** et **t + dt.** Une sous étape 45d consiste ensuite à comparer cette variation de vitesse ΔV par rapport à une valeur seuil de variation de vitesse prédéterminée, par exemple égale 2 mètres par seconde. Si la variation de vitesse ΔV mesurée est inférieure à la valeur seuil prédéterminée, alors la première sous étape 45a de l'étape d'analyse est réitéré pour un instant **t = t + dt.**

En revanche, si la variation de vitesse ΔV est supérieure à la valeur seuil de variation de vitesse prédéterminée, le bloc d'analyse 30b passe à une troisième étape 46 de décision, consistant à transmettre l'ordre de transmission du signal d'activation des moyens de protection à l'unité de communication 32 qui alerte le vêtement de protection 34 par liaison radio, via l'unité de communication embarquée 34a.

Il est à noter que la fréquence de traitement de cet algorithme de détection est avantageusement fixée à 1 KHz, ce qui implique une durée entre deux temps de mesure correspondant à 0,001 seconde.

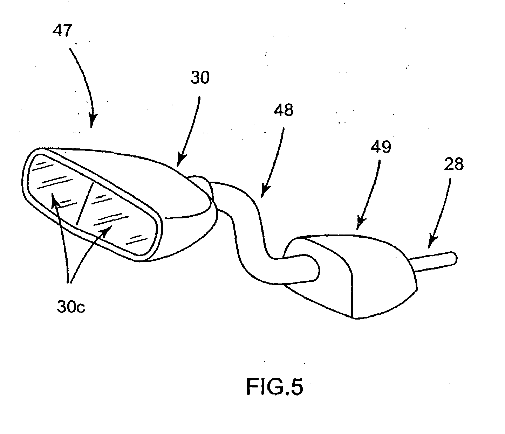

La figure 5 illustre un exemple de réalisation d'une unité de gestion 30 et d'un écran d'affichage 30c appartenant au système de protection de la figure 1.

Selon cet exemple de réalisation, l'unité de gestion 30 et l'écran d'affichage 30c sont positionnés dans un même boîtier 47. Ce boîtier 47 est relié à un flexible 48 permettant d'orienté l'écran d'affichage 30c dans l'angle de vision de l'utilisateur du vêtement de protection 34. En outre, le flexible 48 est solidement fixé sur la fourche 14 du véhicule par le biais d'une semelle 49 d'où s'échappent les faisceaux de connexion 28.

### Description du vêtement de protection

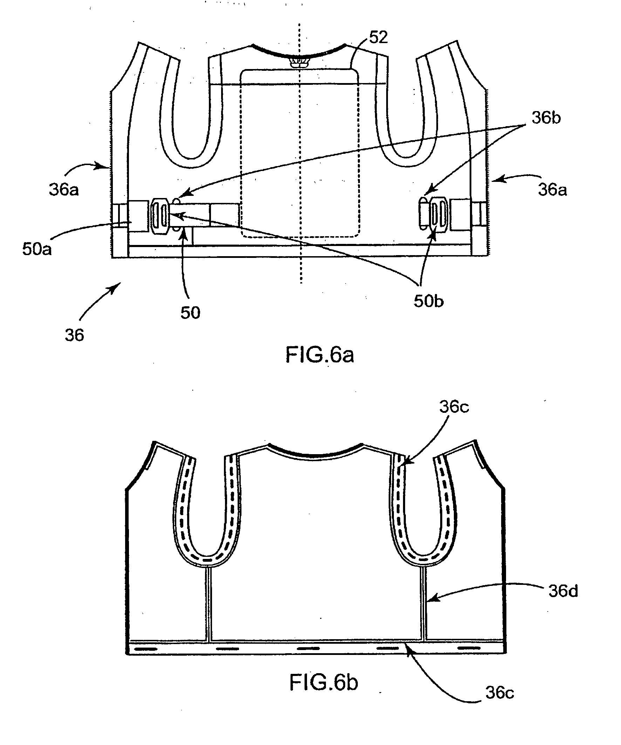

Comme mentionné ci-dessus, le vêtement de protection 34 est notamment composé d'un gilet 36 et d'un airbag 38. À ce titre, la figure 6a illustre de façon schématique un gilet 36 appartenant à un vêtement de protection 34 selon l'invention.

Ce gilet 36 présente une fermeture centrale à glissière 36a et des passant 36b au travers desquels passe une ceinture lombaire 50. La ceinture lombaire 50 comporte une boucle d'ajustement aménagée pour permettre d'ajuster le gilet 36, et donc l'airbag 38, à la morphologie de l'utilisateur et de les maintenir en position, notamment en cas d'accident. Le réglage de la ceinture lombaire 50 se fait une fois seulement pour un gabarit donné.

Cette ceinture lombaire 50 présente une largeur de dix centimètres de large ainsi que des bandes élastiques présentant deux extrémités avantageusement dotés de boucles de fermeture 50a pour soulager la tension induite sur la fermeture à glissière 36a lorsque la ceinture lombaire 50 est mise en tension à l'aide de boucles de serrage 50b. Par ailleurs, ladite ceinture lombaire 50 est également cousue sur la partie arrière de l'airbag 38. Le gilet 36 s'emploi après comme un vêtement standard présentant une fermeture centrale à glissière 36a. La tension de la ceinture lombaire 50 pourra cependant être réglée selon les besoins de l'utilisateur.

Le gilet 36 comporte également, des éléments sécables 36c et, avantageusement, des soufflets d'expansion 36d pour le déploiement de l'airbag 38 sans contrainte. Les éléments sécables 36c sont positionnés en regard des soufflets d'expansion 36d, au niveau du col, des ouvertures pour bras et de la partie basse du gilet 36.

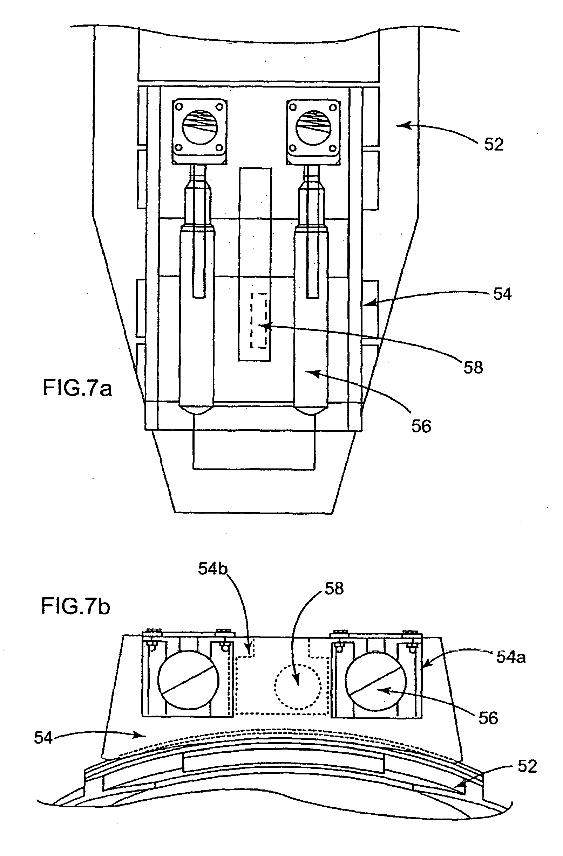

Les figures 7a et 7b représentent un premier exemple de réalisation d'une plaque dorsale 52 soutenant un support de mousse 54 utilisé pour maintenir en position deux générateurs de gaz 56 et une unité de commande 58 permettant d'activer le gonflement de l'airbag 38.

La plaque dorsale 52 est cousue dans la doublure arrière du gilet 36 et maintenue en place par une fermeture à glissière qui permet le montage et le changement des piles de l'unité de commande 58.

Selon un mode de réalisation adapté à un être humain 50ème percentile, la plaque dorsale 52 présente une épaisseur de 1,5 centimètres, une hauteur de 47,5 centimètres, une largeur au niveau des épaules de 29 centimètres, au niveau de la taille de 26 centimètres et au niveau de la zone lombaire de 29 centimètres. Le poids total d'une telle plaque dorsale 52 est d'environ 800 grammes. Les dimensions de ladite plaque dorsale 52 doivent permettre de protéger la cage thoracique, les reins et le rachis de la 1 ère vertèbre thoracique jusqu'au plus proche du coccyx en évitant une gêne avec l'arrière de la selle du véhicule.

La plaque dorsale 52 supporte le support de mousse 54 qui intègre lui-même des éléments de réception 54a de deux générateurs de gaz 56 ainsi que des éléments de réception 54b de l'unité électronique de commande embarquée 58.

Le support en mousse 54 a pour fonction de protéger les composants qu'il intègre dans le cas d'une utilisation normale d'un vêtement moto. Par ailleurs, ce support de mousse 54 permet également de remplacer aisément les générateurs de gaz s'ils ont été utilisés, ainsi que les piles du boîtier électronique de commande 58.

D'autre part, les générateurs de gaz 56 employés présentent un diamètre de quarante millimètres, pour un nombre de moles égal à 2,50 mol, une longueur de 197 mm et une masse de 460 grammes. Ces générateurs de gaz 56 sont intégrés dans les éléments de réception 54a du support en mousse 54 et fixés à l'airbag 38 au moyen d'interfaces spécifiques aptes à coopérer avec deux points d'injection des gaz présentant un diamètre de 32 millimètres.

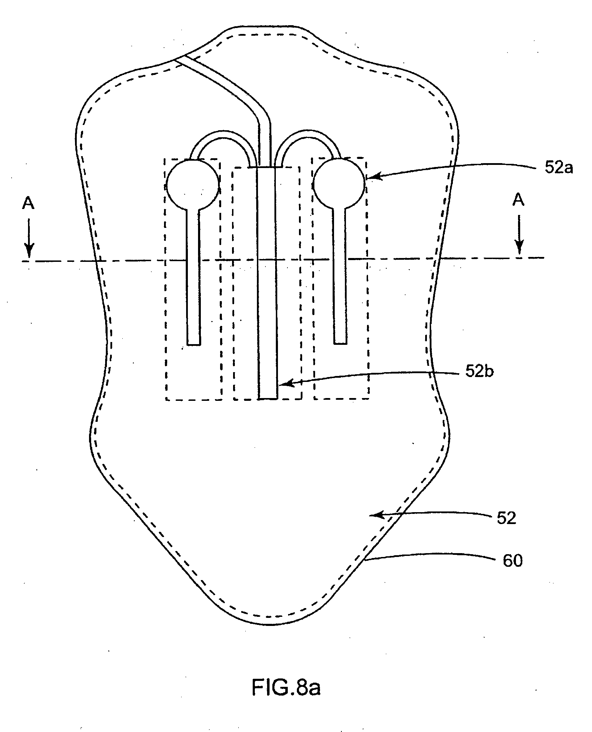

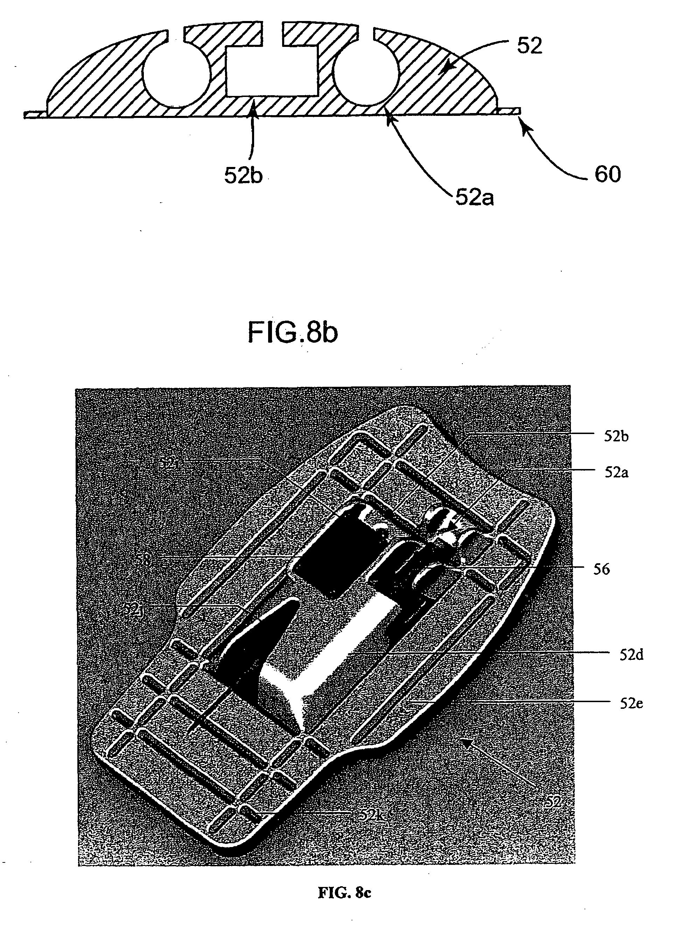

Les figures 8a et 8b représentent un exemple de réalisation avantageux d'une plaque dorsale 52 comportant des moyens de réception 52a de l'unité de commande 58 et des moyens de réception 52b des générateurs de gaz 56.

De même que précédemment, cette plaque dorsale 52 est cousue dans la doublure arrière du gilet 36 et maintenue en place par une fermeture à glissière qui permet le montage et le changement des piles du boîtier électronique. La plaque dorsale présente également une hauteur de 47,5 centimètres, une largeur au niveau des épaules de 29 centimètres, au niveau de la taille de 26 centimètres et au niveau de la zone lombaire de 29 centimètres afin de protéger la cage thoracique, les reins et le rachis de la 1 ère vertèbre thoracique jusqu'au plus proche du coccyx en évitant une gêne avec l'arrière de la selle du véhicule. Toutefois, selon un mode de réalisation adapté à un être humain 50ème percentile, la plaque dorsale 52 présente une épaisseur de 5 centimètres afin d'intégrer des évidemment 52a pour la réception des générateurs de gaz 56.

Ainsi, la plaque dorsale présente deux évidements 52a, d'un rayon de 4 centimètres et d'une longueur de 19 centimètres, formés dans l'épaisseur de la plaque dorsale afin de recevoir les générateurs de gaz 56.

Avantageusement, de tels évidements 52a sont positionnés de part et d'autre du plan médian de la plaque dorsale 52 afin de ne pas constituer un danger potentiel pour la colonne vertébrale de l'utilisateur. En effet, les générateurs de gaz 56 sont des éléments relativement durs pour le corps humain. Par conséquent, leur positionnement dans le dos, au niveau des muscles et de part et d'autre de la colonne vertébrale, permet de protéger les zones anatomiques les plus sensibles en cas de choc généré lors d'un accident.

Selon ce mode de réalisation particulier, la plaque dorsale 52 comporte également une cavité 52b formée dans entre les deux évidements de réception 52a des générateurs de gaz 56 afin de recevoir l'unité de commande embarquée 58. Cette cavité 52b présente, par exemple une largeur de 5 centimètres pour une épaisseur de 3 centimètres et une longueur de 18 centimètres.

De préférence, la plaque dorsale 52 comporte en outre des rainures permettant d'acheminer des faisceaux électriques provenant l'unité de commande embarquée 58 pour alimenter et commander les générateurs de gaz 56.

Le pourtour de la plaque dorsale 52 comporte, de façon avantageuse, des moyens d'ancrage 60, tels qu'une bande velcro, permettant de d'assurer la fixation de cette plaque dorsale 52 dans le gilet 36.

La figure 8c représente une vue en perspective d'un autre mode de réalisation d'une plaque dorsale 52 pouvant être intégrée dans la doublure arrière du gilet 36 grâce à la présence d'une ouverture à glissière.

La plaque dorsale 52 présente une forme de base rectangulaire et est dotée d'ailes latérales générant une rupture de géométrie permettant de faciliter la mise en position et le maintien de la plaque dorsale 52 à l'intérieur du gilet de protection 36. Comme précédemment, ladite plaque dorsale 52 présente des dimensions permettant de protéger la zone lombaire, la cage thoracique, les reins et le rachis de la 1 ère vertèbre thoracique jusqu'au plus proche du coccyx en évitant une gêne avec l'arrière de la selle du véhicule.

Ladite plaque dorsale 52 est formée à partir de polypropylène expansé ce qui permet d'obtenir une structure de poids réduit. Avantageusement, le polypropylène peut présenter deux densités de matière distinctes. Une première densité de matière, dite dense, est utilisée pour former la partie extérieur de la plaque dorsale 52 intégrant les composant du système de protection tandis qu'une deuxième densité de matière, dite peu dense, est employée pour former la partie intérieure de la plaque dorsale 52, en contact avec l'utilisateur. De ce fait, le confort de l'utilisateur est amélioré.

La plaque dorsale 52 comporte une portion centrale 52d et une portion périphérique 52e, la portion centrale 52d présentant une surépaisseur dans laquelle est aménagée un premier évidement 52a ayant pour fonction de recevoir un générateur de gaz 56 ainsi qu'un second évidemment 52b ayant pour fonction de recevoir l'unité de commande embarquée 58.

De préférence, le premier évidement 52a et le deuxième évidement 52b présentent des formes complémentaires vis-à-vis, respectivement, du générateur de gaz 56 et de l'unité de commande 58 afin de les bloquer en position. D'autre part, le deuxième évidemment 52b présente également une première ouverture 52i permettant d'accéder au capot de changement de pile de l'unité de commande 58 sans avoir à démonter la plaque dorsale 52 ainsi qu'une deuxième ouverture 52j permettant d'observer un voyant, disposé sur l'unité de commande 58, indiquant l'état de fonctionnement de celui-ci.

Des rainures 52k, de préférence orientées selon deux direction sensiblement perpendiculaires, sont agencées dans la portion périphérique 52e de la plaque dorsale 52 afin d'assurer sa flexibilité.

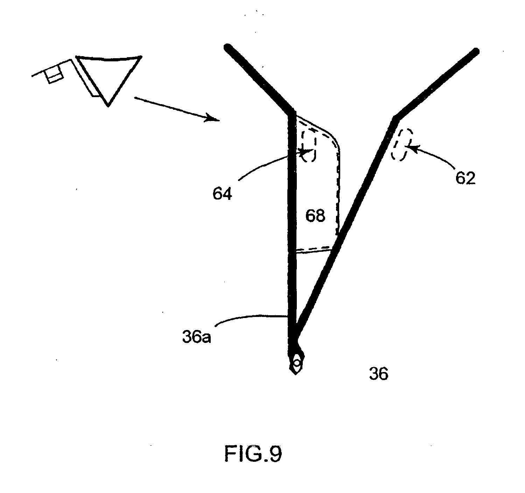

La figure 9 illustre un gilet appartenant à un vêtement de protection selon l'invention et doté d'un interrupteur électronique 62 s'activant lors de la fermeture du gilet 36 pour mettre sous tension l'unité de commande embarquée 58.

L'interrupteur électronique 62 est avantageusement un interrupteur magnétique, de type *REED*, installé dans une doublure, sur la partie haute du gilet 36, du côté gauche de la fermeture centrale à glissière 36a. Un aimant 64 est également fixé à l'intérieur d'une languette 68 localisée sur le haut thorax de façon à générer un champ magnétique détectable par l'interrupteur électronique 62 lorsque que la fermeture centrale à glissière 36a est fermée.

Ainsi, l'interrupteur électronique 62 émet un signal d'activation lorsque le gilet 36 est fermé, permettant de mettre sous tension l'unité de commande embarquée 58 du vêtement de protection 34. Dès lors, les moyens de protection ne peuvent être activés tant que le vêtement de protection 34 n'est pas convenablement fermé, ce qui permet également d'économiser de la batterie lorsque le gilet 36 n'est pas porté.

En outre, si l'unité de commande 58 n'est pas sous tension, l'élément de communication embarqué 34a dans le vêtement de protection ne communique pas avec l'unité de gestion 30 du système de détection 2 qui indique alors un défaut sur l'écran d'affichage 30c. Il suffit alors que l'utilisateur ferme correctement son gilet 36 pour que ce défaut disparaisse. Cette fonction permet de contrôler le port correct du vêtement de protection par l'utilisateur.

Le poids de l'ensemble du vêtement de protection 34 est avantageusement de 3,5 Kg.

### L'airbag gilet

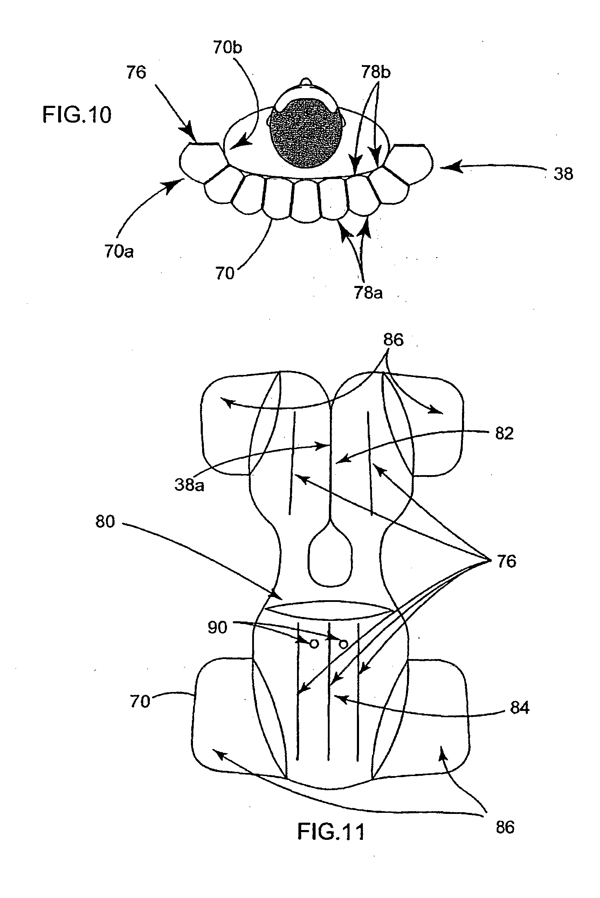

La figure 10 représente une vue partielle d'un exemple de réalisation d'airbag 38 selon l'invention positionné sur le dos d'un utilisateur.

Selon cet exemple de réalisation, l'airbag 38 présente une enveloppe 70 constituée d'une face extérieure 70a et d'une face intérieure 70b reliées par des bandes de liaison 76. Ces bandes de liaison 76 permettent de conférer à l'enveloppe 70 gonflée une épaisseur sensiblement constante. Selon un exemple de réalisation particulier, ces bandes de liaison 76 présentent une largeur d'environ 10 centimètres.

Les portions de l'enveloppe 70 qui joignent deux bandes de liaison 76 successives forment des portions 78a, 78b. Ainsi, l'enveloppe est constituée de portions extérieures 78a et de portions intérieures 78b. Les dimensions de certaines portions intérieures 78b sont inférieures aux dimensions des portions extérieures 78a qui sont en vis-à-vis. De ce fait, l'enveloppe 70 comporte des parties courbées 80 suivant les formes du corps humain pour garantir un positionnement optimal de l'airbag 38.

Il est à noter que les bandes de liaison 76 sont avantageusement orientées selon une même direction pour que l'enveloppe 70 présente une géométrie régulière et que les gaz de gonflement soient rapidement acheminés vers les différentes parties de l'airbag 38. En outre, les bandes de liaisons 76 sont, de préférence, régulièrement espacées ce qui permet d'obtenir une enveloppe 70 présentant une épaisseur sensiblement constante.

L'épaisseur minimum, au niveau des bandes de liaison est d'environ 10 centimètres tandis que l'épaisseur maximum, à mi-distance entre deux bandes de liaison est de 14 centimètres. Dès lors, l'épaisseur moyenne de l'enveloppe est d'environ 13 centimètres.

La figure 11 illustre un mode de réalisation d'un airbag 38 apte à présenter la forme d'un gilet mais représenté sous forme aplatie.

Une étude d'accidentologie des véhicules dépourvus de cellules de survie a permis d'identifier les zones anatomiques où les lésions sont les plus graves. Ces zones correspondent au thorax, à l'abdomen et à la colonne vertébrale. Il est donc nécessaire qu'un airbag de protection puisse couvrir ces zones anatomiques. À ce titre, l'airbag 38 selon l'invention présente la forme d'un gilet.

Ainsi, l'architecture de l'airbag 38 est réalisée de sorte que l'enveloppe 70 permette d'épouser les formes du tronc humain lorsqu'elle est gonflée. L'airbag 38 comporte également une ouverture centrale 38a afin de pouvoir être intégré sur un gilet de protection 36 présentant lui-même une fermeture centrale à glissière 36a. L'airbag 38 comporte également deux portions de jointure (non représentées sur le schéma) placées de part et d'autre de l'ouverture centrale 38a. Les portions de jointure 38b peuvent alors avantageusement être cousues sur deux parties du gilet 36 placées de part et d'autre de la fermeture centrale à glissière 36a.

L'enveloppe 70 est dotée d'une partie ventrale 82 et d'une partie dorsale 84 séparées par une ouverture permettant de faire passer la tête de l'utilisateur. Chacune des parties ventrale 82 et dorsale 84 est dotée de deux volets latéraux 86 aptes à protéger les utilisateurs contre tout choc porté sur les flancs du tronc. Selon ce mode de réalisation, le volume total de l'airbag pour une taille de 50^{ème} percentile est de 80 litres et présente un poids de 850 grammes.

La forme de gilet est conférée à l'airbag 38 par le biais de parties courbées 80 situées au niveau de la zone supérieure de la partie dorsale ainsi qu'au niveau des articulations des volets latéraux 86. Par ailleurs, la partie ventrale de l'airbag est divisée en deux sous-parties définissant une ouverture centrale 38a.

De plus, chaque sous-partie est avantageusement dotée de portions de jointures permettant de fixer les deux extrémités de l'airbag formant l'ouverture centrale sur la doublure de la fermeture centrale du gilet. Cette fixation peut être réalisée par couture ou bien éventuellement par collage. Ainsi, l'assemblage et le maintien en position de cet airbag par rapport au gilet est ainsi assurée au niveau de la portion de jointure.

L'airbag comporte également de façon avantageuse des ouvertures d'injection 90 positionnées sensiblement au niveau de la zone supérieure de la partie dorsale de l'enveloppe de l'airbag et, de préférence, de part et d'autre du plan médian de la partie dorsale de l'airbag. Cette position des ouvertures d'injection 90 permet de placer les générateurs de gaz 56 au niveau de zones anatomiques qui sont relativement résistante. Les risques de blessure sont donc diminués en cas de choc.

Il est à noter que l'assemblage des pièces de tissus constituant l'airbag 38 est assuré par un procédé sans couture permettant un gonflage à des pressions de 1 bar en garantissant une étanchéité d'une dizaine de secondes. Par ailleurs, le tissu utilisé est avantageusement de 350 ou 235 décitex. Ainsi, les risques de fuites de gaz lors d'un accident sont réduits, ce qui permet d'augmenter la durée pendant laquelle l'airbag 38 reste gonflé. La durée de protection est alors augmentée, ce qui est avantageuse lorsque l'utilisateur de l'airbag de protection glisse sur plusieurs mètres avant de rencontrer un obstacle.

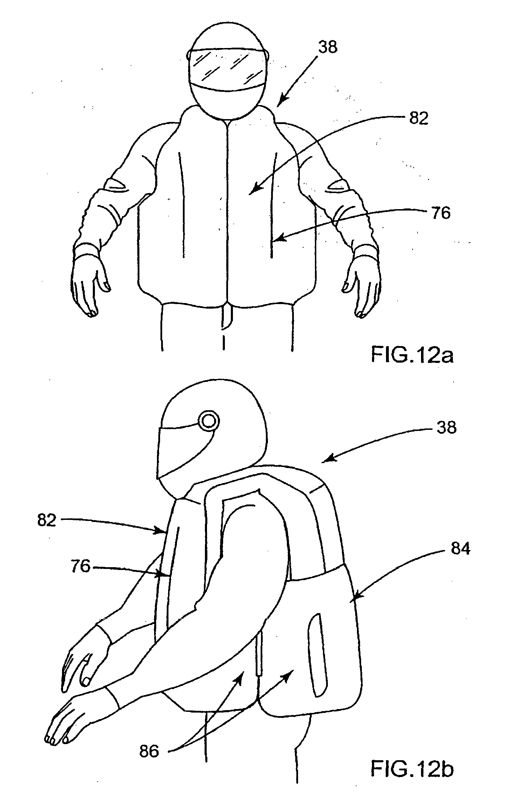

Les figures 12a et 12b représentent un utilisateur de véhicule motorisé portant un airbag tel que décrit en référence aux figures 10 et 11.

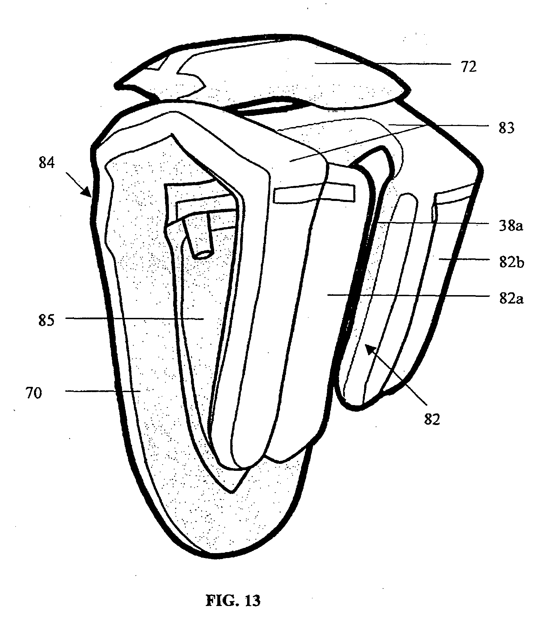

La figure 13 représente un autre mode de réalisation d'un airbag gonflé appartenant au vêtement de protection de la figure 1.

De la même façon que précédemment, l'architecture de l'airbag 38 est réalisée de sorte que l'enveloppe 70 permette d'épouser les formes du tronc humain lorsqu'elle est gonflée. L'airbag 38 comporte également une ouverture centrale 38a afin de pouvoir être intégré sur un gilet de protection 36 présentant lui-même une fermeture centrale à glissière 36a.

L'enveloppe 70 est dotée d'une partie ventrale 82 et d'une partie dorsale 84 reliées par l'intermédiaire de parties de jonction 83 définissant une ouverture permettant de faire passer la tête de l'utilisateur.

La partie dorsale 84 présente une forme de conduit courbé et refermé sur lui-même, formé autour d'une pièce 85 hermétiquement indépendante. Cette pièce 85 hermétiquement indépendante est non gonflée et positionnée en regard de la plaque dorsale 54 lorsque celle-ci est placée dans le gilet de protection 36. Ainsi, le volume de gaz à injecter dans l'airbag 38 est limité ce qui permet de restreindre l'encombrement et le poids des générateurs de gaz 56. En outre, l'airbag 38 est capable de se plaquer contre le corps de l'utilisateur en intégrant l'épaisseur de la plaque dorsale 52 dans l'épaisseur du sac gonflé.

L'airbag 38 comporte en outre une enveloppe secondaire 72 relié à l'enveloppe 70 via au moins un canal de sorte qu'une partie de l'air injecté dans l'enveloppe 70 se propage dans l'enveloppe secondaire 72. Cette enveloppe secondaire 72 repose sur la jonction entre les parties dorsales 84 et ventrales 82 de l'enveloppe 70 lorsqu'elle est gonflée. Ainsi, cette enveloppe secondaire 72 est apte à se positionner sous le casque de l'utilisateur lorsqu'elle es gonflée, pour en limiter le débattement lors d'accidents.

L'airbag 38 comporte également une ouverture d'injection 90 positionnée sensiblement au niveau de la zone supérieure de la partie dorsale 84 de l'enveloppe 70 de l'airbag 38.

Comme précédemment, l'assemblage des pièces de tissus constituant l'airbag 38 est assuré par un procédé sans couture permettant un gonflage à des pressions de 1 bar en garantissant une étanchéité d'une dizaine de secondes. Par ailleurs, le tissu utilisé est avantageusement de 350 ou 235 décitex. Ainsi, les risques de fuites de gaz lors d'un accident sont réduits, ce qui permet d'augmenter la durée pendant laquelle l'airbag 38 reste gonflé. La durée de protection est alors augmentée, ce qui est avantageuse lorsque l'utilisateur de l'airbag de protection glisse sur plusieurs mètres avant de rencontrer un obstacle.

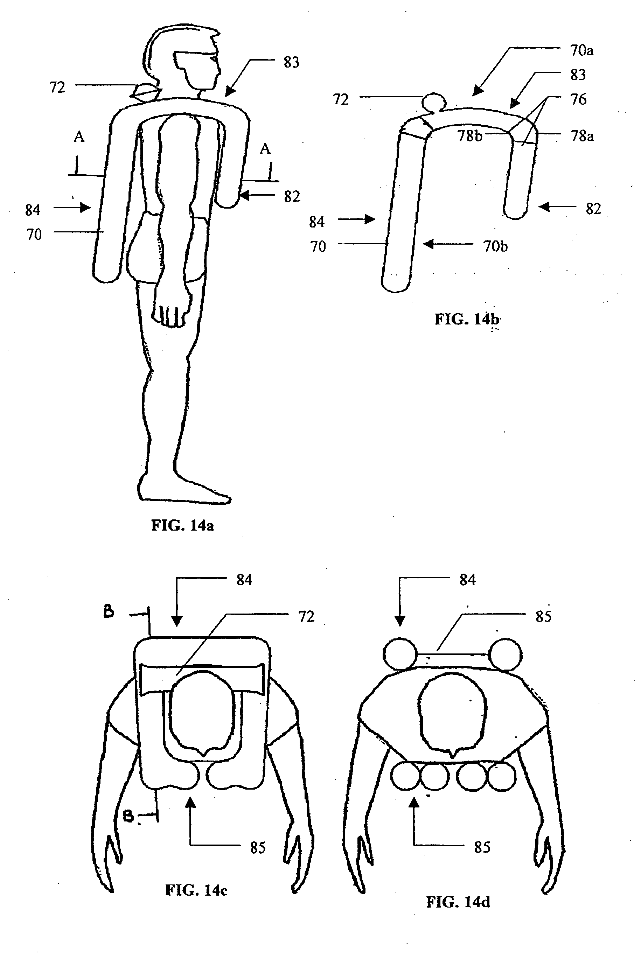

Les figures 14a, 14b, 14c et 14d. représentent des vues de devant, en coupe AA, de dessus et en coupe BB de l'airbag de la figure 13.

Il ressort, notamment de ces figures que, de la même façon que précédemment, l'airbag 38 présente une enveloppe 70 constituée d'une face extérieure 70a et d'une face intérieure 70b reliées par des bandes de liaison 76. Les portions de l'enveloppe 70 qui joignent deux bandes de liaison 76 successives forment des portions 78a, 78b. Ainsi, l'enveloppe est constituée de portions extérieures 78a et de portions intérieures 78b. Les dimensions de certaines portions intérieures 78b sont inférieures aux dimensions des portions extérieures 78a qui sont en vis-à-vis. De ce fait, l'enveloppe 70 comporte des parties courbées 80 suivant les formes du corps humain pour garantir un positionnement optimal de l'airbag 38.

Ainsi la forme de gilet est conférée à l'airbag 38 par le biais de parties courbées 80 agencées dans les parties de jonction 83 situées au niveau des épaules.

En outre, il apparaît également que, selon un mode de réalisation avantageux, la partie ventrale 82 de l'airbag comprend deux sous parties 82a, 82b séparée par une ouverture centrale 38a. Chacune de ces sous parties est formées de deux boudins respectivement reliés à la partie de jonction. Une telle configuration présente l'avantage de limiter le volume de la partie ventrale 82 et donc l'air nécessaire pour la gonfler.

L'invention n'est pas limitée aux exemples de réalisation décrits et représentés. Il est également possible de prévoir un airbag 38 selon l'invention présentant plusieurs enveloppes 70 communiquant entre elles et dont l'une au moins présenterait les caractéristiques techniques susmentionnées.

## Revendications

1. Airbag de protection destiné à prendre la forme d'une pièce d'habillement lorsqu'il est gonflé, comportant au moins une enveloppe (70) constituée d'une face extérieure (70a) et d'une face intérieure (70b) et l'enveloppe (70) définissant une partie ventrale (82), une partie dorsale (84) et une partie de jonction (83), **en ce que** les faces extérieure (70a) et intérieure (70b) sont reliées par plusieurs bandes de liaison (76), deux bandes de liaison (76) successives définissant entre-elles une portion extérieure (78a) et une portion intérieure (78b) positionnées en vis-à-vis, la portion intérieure (78b) présentant une surface inférieure à la surface de la portion extérieure qui est en vis-à-vis et
**en ce que,** la partie de jonction (83) reliant la partie ventrale (82) et la partie dorsale (84) au niveau des épaules, lesdites plusieurs bandes de liaison (76) sont en outre agencées dans la partie de jonction (83), de sorte que, lorsque l'enveloppe (70) est gonflée, l'airbag présente des parties auto-courbées épousant les formes du corps humain.

2. Airbag de protection selon la revendication 1, dans lequel la partie ventrale (82) est divisée en deux sous parties (82a, 82b) séparées par une ouverture centrale (38a).

3. Airbag de protection selon la revendication 2, dans lequel les deux sous parties sont dotées de portions de jointure aptes à se fixer sur une pièce d'habillement.

4. Airbag de protection selon l'une quelconque des revendications 1 à 3, dans lequel la partie dorsale (84) présente une forme de conduit courbé refermé sur lui-même.

5. Airbag de protection selon l'une quelconque des revendications 1 à 4 comportant une enveloppe secondaire (72) reliée à l'enveloppe (70) par l'intermédiaire d'au moins un orifice.

6. Airbag de protection selon la revendication 5, dans lequel l'enveloppe secondaire (72) repose sur la partie de jonction de sorte à se positionner sous la nuque d'un utilisateur lorsque ladite enveloppe secondaire (72) est gonflée.

7. Airbag de protection selon la revendication 1, dans lequel les bandes de liaison (76) sont régulièrement espacées de sorte à conférer à l'enveloppe (70) gonflée une épaisseur sensiblement constante.

8. Airbag de protection selon la revendication 7, dans lequel l'épaisseur est comprise entre 5 et 20 centimètres.

9. Airbag de protection selon la revendication 7 ou la revendication 8, dans lequel l'enveloppe (70) présente des bandes de liaison (76) orientées sensiblement selon une même direction.

10. Airbag de protection selon l'une quelconque des revendications 1 à 9, dans lequel l'enveloppe comporte au moins une ouverture d'injection (90) positionnée sensiblement au niveau de la zone supérieure de la partie dorsale (84).

11. Airbag de protection selon l'une quelconque des revendications 1 à 10 présentant deux ouvertures d'injection (90) positionnées de part et d'autre du plan médian de la partie dorsale (84).

12. Airbag de protection selon l'une quelconque des revendications 1 à 6, dans lequel l'enveloppe (70) est constituée de plusieurs pièces dont les extrémités sont collées les unes aux autres.

## Patentansprüche

1. Schutzairbag, dazu ausgelegt, die Form eines Kleidungsstücks anzunehmen, wenn er aufgebläht ist, umfassend mindestens eine Umhüllung (70), die aus einer äußeren Seite (70a) und einer inneren Seite (70b) besteht, und wobei die Umhüllung (70) einen Bauchteil (82), einen Rückenteil (84) und einen Verbindungsteil (83) definiert, dadurch dass die äußere (70a) und die innere Seite (70b) durch mehrere Verbindungsbänder (76) miteinander verbunden sind, wobei zwei aufeinander folgende Verbindungsbänder (76) untereinander einen äußeren Abschnitt (78a) und einen inneren Abschnitt (78b) definieren, die einander gegenüber positioniert sind, wobei der innere (78b) Abschnitt eine Fläche aufweist, die unterhalb der Fläche des äußeren Abschnitts liegt, der gegenüber liegt, und dadurch, da der Verbindungsteil (83) den Bauchteil (82) und den Rückenteil (84) auf der Ebene der Schultern miteinander verbindet, die mehreren Verbindungsbänder (76) außerdem im Verbindungsteil (83) derart angeordnet sind, dass, wenn die Umhüllung (70) aufgebläht ist, der Airbag selbstgekrümmte Teile aufweist, die sich den Formen des menschlichen Körpers anpassen.

2. Schutzairbag nach Anspruch 1, wobei der Bauchteil (82) in zwei Unterteile (82a, 82b) geteilt ist, die von einer zentralen Öffnung (38a) getrennt sind.

3. Schutzairbag nach Anspruch 2, wobei die zwei Unterteile mit Verbindungsabschnitten ausgestattet sind, die ausgelegt sind, um sich auf einem Kleidungsstück zu befestigen.

4. Schutzairbag nach einem der Ansprüche 1 bis 3, wobei der Rückenteil (84) die Form eines gekrümmten Kanals aufweist, der auf sich selbst geschlossen ist.

5. Schutzairbag nach einem der Ansprüche 1 bis 4, umfassend eine zweite Umhüllung (72), die mit der Umhüllung (70) mit Hilfe von mindestens einer Öffnung verbunden ist.

6. Schutzairbag nach Anspruch 5, wobei die zweite Umhüllung (72) derart auf dem Verbindungsteil aufliegt, dass sie sich unter dem Nacken eines Benutzers positioniert, wenn die zweite Umhüllung (72) aufgebläht ist.

7. Schutzairbag nach Anspruch 1, wobei die Verbindungsbänder (76) regelmäßig beabstandet sind, um der aufgeblähten Umhüllung (70) eine im Wesentlichen konstante Dicke zu verleihen.

8. Schutzairbag nach Anspruch 7, wobei die Dicke zwischen 5 und 20 Zentimeter liegt.

9. Schutzairbag nach Anspruch 7 oder Anspruch 8, wobei die Umhüllung (70) Verbindungsbänder (76) aufweist, die im Wesentlichen in eine gleichen Richtung ausgerichtet sind.

10. Schutzairbag nach einem der Ansprüche 1 bis 9, wobei die Umhüllung mindestens eine Injektionsöffnung (90) umfasst, die im Wesentlichen auf der Ebene des oberen Bereichs des Rückenteils (84) positioniert ist.

11. Schutzairbag nach einem der Ansprüche 1 bis 10, der zwei Injektionsöffnungen (90) aufweist, die auf beiden Seiten der mittleren Ebene des Rückenteils (84) positioniert sind.

12. Schutzairbag nach einem der Ansprüche 1 bis 6, wobei die Umhüllung (70) aus mehreren Stücken besteht, deren Enden miteinander verklebt sind.

## Claims

1. Protective airbag intended to take the form of a piece of trim when it is inflated, comprising at least one jacket (70) constituted of an outer surface (70a) and of an inner surface (70b) and the jacket (70) defining a ventral part (82), a back part (84) and a junction part (83), in that the outer (70a) and inner (70b) surfaces are connected by several linking strips (76), with two successive linking strips (76) defining between them an outer portion (78a) and an inner portion, (78b) facing one another, with the inner portion (78b) having a surface lower than the surface of the outer portion that is facing it and
in that the junction part (83) connecting the ventral part (82) and the back part (84) on the shoulders, said several linking strips (76) are furthermore arranged in the junction part (83),
in such a way that, when the jacket (70) is inflated, the airbag has self-curved parts that hug the shapes of the human body.

2. Protective airbag according to claim 1, wherein the ventral part (82) is divided into two subparts (82a, 82b) separated by a central opening (38a).

3. Protective airbag according to claim 2, wherein the two subparts are provided with seam portions able to be fixed on a piece of trim.

4. Protective airbag according to any of claims 1 to 3, wherein the back part (84) has the shape of a curved duct closed on itself.

5. Protective airbag according to any of claims 1 to 4 comprising a secondary jacket (72) connected to the jacket (70) by the intermediary of at least one orifice.

6. Protective airbag according to claim 5, wherein the secondary jacket (72) rests on the junction part in such a way as to be positioned under the nape of a user when said secondary jacket (72) is inflated.

7. Protective airbag according to claim 1, wherein the linking strips (76) are regularly spaced in such a way as to confer upon the inflated jacket (70) a substantially constant thickness.

8. Protective airbag according to claim 7, wherein the thickness is between 5 and 20 centimetres.

9. Protective airbag according to claim 7 or claim 8, wherein the jacket (70) has linking strips (76) oriented substantially according to the same direction.

10. Protective airbag according to any of claims 1 to 9, wherein the jacket comprises at least one injection opening (90) positioned substantially on the upper zone of the back part (84).

11. Protective airbag according to any of claims 1 to 10 having two injection openings (90) positioned on either side of the median plane of the back part (84).

12. Protective airbag according to any of claims 1 to 6, wherein the jacket (70) is constituted of several parts of which the ends are glued to each other.
